# EUROPEAN PATENT SPECIFICATION

(11) **EP 1 034 317 B1**
(45) Date of publication and mention of the grant of the patent: **09.01.2002**
(21) Application number: 98940356.3
(22) Date of filing: 21.08.1998
(51) Int. Cl.: C22C 37/00, F16D 65/12

(54) **DISC BRAKE ROTOR WITH A GREY CAST IRON COMPOSITION**
BREMSSCHEIBE MIT EINER GRAUGUSS-ZUSAMMENSETZUNG
ROTOR DE FREIN A DISQUE AYANT UNE COMPOSITION A BASE DE FONTE GRISE

(30) Priority: 09.09.1997 GB 9718982
(43) Date of publication of application: 13.09.2000
(73) Proprietor: Federal-Mogul Technology Limited, Rugby, Warwickshire CV22 7SA (GB)
(72) Inventor: HOLME, John, David, Warwickshire CV23 0DY (GB)
(74) Representative: Drury, Peter Lawrence
(86) International application number: GB9802526
(87) International publication number: WO9913122

(56) References cited:
- EP-A- 0 778 355
- PATENT ABSTRACTS OF JAPAN vol. 014, no. 377 (C-0748), 15 August 1990 & JP 02 138438 A (NISSAN MOTOR CO LTD), 28 May 1990
- PATENT ABSTRACTS OF JAPAN vol. 012, no. 462 (C-549), 5 December 1988 & JP 63 183150 A (RAILWAY TECHNICAL RES INST), 28 July 1988
- PATENT ABSTRACTS OF JAPAN vol. 010, no. 276 (C-373), 10 September 1986 & JP 61 096055 A (JAPANESE NATIONAL RAILWAYS;OTHERS: 01), 14 May 1986
- PATENT ABSTRACTS OF JAPAN vol. 095, no. 011, 26 December 1995 & JP 07 216495 A (HITACHI METALS LTD), 15 August 1995

## Description

This invention is concerned with a disc brake rotor.

A disc brake rotor is arranged to rotate with a member, such as a wheel of a vehicle or a rotating part of a machine. Such a rotor provides two oppositely-facing annular friction surfaces which, in the operation of the brake, are engaged by blocks of friction material to decelerate the rotor and hence the member. Two of the friction material blocks are moved (usually by hydraulic means) towards one another into contact with the two friction surfaces so that frictional forces occur slowing the rotation of said rotor, and hence of said member.

In selecting a material for a disc brake rotor, it is necessary to consider the coefficient of friction of the material and its thermal properties, since considerable heat is generated during braking. Conventionally, disc brake rotors for passenger vehicles have been made from unalloyed grey irons consisting of flake graphite in a pearlitic matrix. These have carbon contents in the range 3.25-3.55 wt% and strength levels are typically approximately 220 MPa. In order to increase thermal conductivity, the carbon level can be increased to 3.65-3.95 wt% but this decreases the strength, eg to approximately 150 MPa. Increased carbon levels also may result in microstructural defects so that casting difficulties are increased.

It is well known to alloy the higher carbon-containing irons with matrix strengthening elements such as chromium, molybdenum, nickel and vanadium in order to increase the strength. For example, WO 96/07766 discloses a pearlitic grey iron which comprises 3.5-3.7 wt% carbon, 1.9-2.05 wt% silicon, 0.05-0.1 wt% vanadium, 0.2-0.3 wt% molybdenum, 0.2-0.3 wt% chromium and 0.2-0.3 wt% copper. EP 0778355 A discloses a grey cast iron for brake discs containing 3.65-3.95 wt% carbon, 1.8-2.2 wt% silicon, 0.2-0.4 wt% chromium, 0.2-0.8 wt% niobium and 0.3-0.5 wt% copper. However, alloying has a detrimental effect on thermal conductivity.

JP-A-2 138 434 discloses a disc brake comprising flake graphite iron having 3.5-4.0C, 1.4-2.0 Si, 0.5-0.8 Mn, 0.4-1.2 Mo, 0.05-0.10 Ti, 0.02-0.35 V, 0.01-0.05 Ce, 0.20-2.0 Cu, 0.05-1.0 Cr balance Fe which is wear there is no text missing resistant and resistant to thermal cracking.

In addition to thermal and mechanical considerations, a material for a disc brake rotor must exhibit good wear resistance. In an unalloyed iron, wear resistance is primarily a function of the matrix structure and its hardness. Alloying the iron can create carbides so that wear resistance becomes more a function of the properties of the carbides. However, when vanadium, titanium and chromium are added to iron in excess quantities, a fall in the strength occurs arising from the formation of intergranular carbides in the matrix. Carbide stabilising elements such as chromium, molybdenum and vanadium also increase the tendency for the formation of free ferrite which is detrimental to the strength and tribological properties. For this reason, these elements are normally used at levels which are below those at which free carbides are formed so that the wear benefits of free carbides are not obtained. It is also considered that the use of high alloy structures containing free carbides would cause the formation of "hot spots" resulting in brake judder and heat cracking.

The present invention has the object of further increasing the thermal fatigue and wear resistance properties of a disc brake rotor.

The invention provides a disc brake rotor having a grey cast iron composition, the composition comprising between 0.5 and 1.2% by weight of copper, and a plurality of hard carbide forming metals selected from vanadium, titanium, tungsten, chromium, molybdenum, and niobium, but including both vanadium and titanium, the ratio between the weight of copper present and the total weight of said hard carbide forming metals being 1.8 to 3 units of copper to 1 unit of the hard carbide forming metals, and in that the weight of vanadium present in the composition is less than or equal to one half of the weight of copper present added to 20 times the weight of titanium present.

In a disc brake rotor according to the invention improved thermal fatigue and wear resistance properties are achieved by a careful balance of the additives which, on the one hand, avoids a detrimental microstructure with inter-granular carbide eutectic phases and, on the other hand, gives higher wear resistance. Where chromium is included, preferably, it is at a maximum of 0.05 wt%.

It has previously been recognised that titanium levels can have a critical effect on the co-efficient of friction and wear characteristics of a cast iron disc brake rotor. Levels below 0.1 wt% promote "graphitisation" and form hard discrete particles of titanium carbonitride. Such particles dramatically increase wear performance but, above 0.05 wt% of titanium, the rotors become difficult to machine, bedding-in of the rotor is very slow, and the friction material wear is increased. By this careful selection of titanium, vanadium and copper improved wear and frictional properties can be achieved without the problems of hot-spotting and manufacturing difficulties.

Preferably, in a disc brake rotor according to the invention, the carbon equivalent of the composition is between 4.2 and 4.55, the titanium content of the composition is between 0.025 and 0.035 wt%, the vanadium content of the composition is between 0.35 and 0.45 wt%, and the copper content of the composition is between 0.7 and 0.9 wt%.

There now follow detailed descriptions of two disc brake rotors which are illustrative of the invention.

The first illustrative disc brake rotor has a grey cast iron composition. In order to form the first illustrative disc brake rotor a base cast iron composition was alloyed. The base iron composition was as follows:
carbon 3.65 wt%, silicon 2.10 wt%, phosphorus 0.06 maximum, manganese 0.65 wt%, sulphur 0.10 wt%, nickel residual, and the balance iron. This gave a carbon equivalent of 4.2 to 4.37.

It is considered that practical limits for the base grey iron are:
carbon 3.5-3.8, silicon 2.00-2.20, phosphorus 0.10 maximum, manganese 0.60-0.80, and sulphur 0.15 maximum.

To the base composition, alloying materials were added to give a vanadium content of 0.35 wt%, a titanium content of 0.025 wt%, a chromium content of 0.05 wt% maximum, and a copper content of 0.8 wt%. It should be noted that the composition comprises hard carbide forming metals (vanadium and titanium) which at 0.375 wt% is less than half of the copper content at 0.8 wt%. Thus, the ratio between the weight of copper present and the weight of the hard carbide forming metal is 2.13 units of copper to 1 unit of the hard carbide forming metal.

It should also be noted that the vanadium and titanium present satisfies the formula that the weight of the vanadium present (0.35 wt%) is less than one half of the weight of the copper present added to 20 times the weight of titanium present (0.8 wt% of copper divided by 2 gives 0.4 wt% plus 20 times 0.025 wt% equals 0.9wt%).

The first illustrative rotor was compared in wear tests with a comparison rotor made of a conventional base grey cast iron used for disc brake rotors. This cast iron has a composition of:
carbon 3.42 wt%, silicon 2.37 wt%, manganese 0.65 wt%, sulphur 0.09 wt%, phosphorus 0.04 wt%, chromium 0.3 wt%, titanium 0.03 wt% and the balance iron.

In a wear test at low pressure, the wear on the first illustrative rotor was 69% of that of the comparison rotor. In a medium pressure wear test, the wear on the first illustrative rotor was 57% of that of the comparison rotor. In a high pressure wear test, the wear on the first illustrative rotor was 71% of that of the comparison rotor. In the same tests, the wear on the friction material pads running against the first illustrative rotor was 79%, 88%, and 89%, respectively, compared to the wear on the friction material pads running against the comparison rotor.

The first illustrative rotor was also compared with the comparison rotor in a thermal fatigue resistance test, ie a test in which the materials were stressed cyclically to pre-determined stress levels at various temperatures and the number of cycles to failure were measured. The first illustrative rotor consistently achieved superior results to the comparison rotor, eg at 250°C, at a stress level of 75 MPa the comparison rotor failed at 18,000 cycles whereas the first illustrative rotor failed at 282,000 cycles, and, at a stress level of 70 MPa, the comparison rotor failed at 63,000 cycles whereas the first illustrative rotor failed at 1,122,000 cycles.

The second illustrative disc brake rotor has a grey cast iron composition. Said composition is 3.53 wt% carbon, 2.04 wt% silicon, 0.63 wt% manganese, 0.1 wt% sulphur, 0.06 wt% phosphorus, 0.29 wt% chromium, 0.79 wt% copper, 0.011 wt% titanium, 0.10 wt% vanadium, and the balance iron. Thus, the hard carbide forming metals (chromium, titanium and vanadium total 0.401 wt% so that the ratio between the weight of copper present and the weight of said hard carbide forming metals is 1.97 units of copper to 1 unit of the hard carbide forming metals.

The second illustrative rotor was compared in wear tests with a comparison rotor made of a conventional base grey cast iron described above. In a medium pressure wear test, the wear on the second illustrative rotor was 79% of that of the comparison rotor, and the wear on the friction material pads was 84% of that of the pads running against the comparison rotor.

## Claims

1. A disc brake rotor having a grey cast iron composition, the composition comprising between 0.5 and 1.2% by weight of copper, and a plurality of hard carbide forming metals selected from vanadium, titanium, tungsten, chromium, molybdenum, and niobium, but including both vanadium and titanium, the ratio between the weight of copper present and the total weight of said hard carbide forming metals being 1.8 to 3 units of copper to 1 unit of the hard carbide forming metals, and in that the weight of vanadium present in the composition is less than or equal to one half of the weight of copper present added to 20 times the weight of titanium present.

2. A disc brake rotor according to any one of claim 1, **characterised in that** the carbon equivalent of the composition is between 4.2 and 4.55.

3. A disc brake rotor according to either of claims 1 and 2, **characterised in that** the titanium content of the composition is between 0.025 and 0.035 wt%.

4. A disc brake rotor according to any one of claims 1 to 3, **characterised in that** the vanadium content of the composition is between 0.35 and 0.45 wt%.

5. A disc brake rotor according to any one of claims 1 to 4, **characterised in that** the copper content of the composition is between 0.7 and 0.9 wt%.

## Patentansprüche

1. Bremsscheibe mit einer Graugusszusammensetzung, wobei die Zusammensetzung zwischen 0,5 und 1,2 Gewichtsprozent Kupfer und eine Vielzahl von Hartmetall bildenden Metallen, ausgewählt aus Vanadium, Titan, Wolfram, Chrom, Molybdän und Niobium, jedoch einschließend sowohl Vanadium als auch Titan, aufweist, wobei das Verhälthis zwischen dem Gewicht des vorliegenden Kupfers und dem Gesamtgewicht der Hartmetall bildenden Metalle 1,8 bis 3 Einheiten Kupfer zu 1 Einheit der Hartmetall bildenden Metalle ist, und wobei das Gewicht des in der Zusammensetzung vorliegenden Vanadiums weniger oder gleich einer Hälfte de Gewichts des vorliegenden Kupfers plus dem 20-fachen Gewicht des vorliegenden Titans ist.

2. Bremsscheibe nach Anspruch 1, **dadurch gekennzeichnet, dass** das Kohlenstoffäquivalent der Zusammensetzung zwischen 4,2 und 4,55 beträgt.

3. Bremsscheibe nach Anspruch 1 oder Anspruch 2, **dadurch gekennzeichnet, dass** der Titangehalt der Zusammensetzung zwischen 0,025 und 0,035 Gewichtsprozent beträgt.

4. Bremsscheibe nach einem der Ansprüche 1 bis 3, **dadurch gekennzeichnet, dass** der Vanadiumgehalt der Zusammensetzung zwischen 0,35 und 0,45 Gewichtsprozent beträgt.

5. Bremsscheibe nach einem der Ansprüche 1 bis 4, **dadurch gekennzeichnet, dass** der Kupfergehalt der Zusammensetzung zwischen 0,7 und 0,9 Gewichtsprozent beträgt.

## Revendications

1. Disque de frein à disque ayant une composition de fonte grise, la composition comprenant entre 0,5 et 1,2 % en poids de cuivre, et plusieurs métaux formant un carbure dur choisis parmi le vanadium, le titane, le tungstène, le chrome, le molybdène et le niobium, mais comprenant à la fois du vanadium et du titane, le rapport entre le poids du cuivre présent et le poids total desdits métaux formant un carbure dur étant de 1,8 à 3 unités de cuivre pour 1 unité de métaux formant un carbure dur, et en ce que le poids du vanadium présent dans la composition est inférieur ou égal à la moitié du poids du cuivre présent, ajouté à 20 fois le poids du titane présent.

2. Disque de frein à disque selon la revendication 1, **caractérisé en ce que** l'équi alent de carbone de la composition est compris entre 4,2 et 4,55.

3. Disque de frein à disque selon l'une des revendications 1 et 2, **caractérisé en ce que** la teneur en titane de la composition est comprise entre 0,025 et 0,035 % en poids.

4. Disque de frein à disque selon l'une quelconque des revendications 1 à 3, **caractérisé en ce que** la teneur en vanadium de la composition est comprise entre 0,35 et 0,45 % en poids.

5. Disque de frein à disque selon l'une quelconque des revendications 1 à 4, **caractérisé en ce que** la teneur en cuivre de la composition est comprise entre 0,7 et 0,9 % en poids.
